# EUROPÄISCHE PATENTANMELDUNG

(11) **EP 2 537 985 A1**
(43) Veröffentlichungstag der Anmeldung: **26.12.2012**
(21) Anmeldenummer: 11170592.7
(22) Anmeldetag: 20.06.2011
(51) Int. Cl.: E01H 10/00, B05B 1/32, B05B 13/00, F16K 3/26

(54) **Düse zur Abgabe von Sole**

(71) Anmelder: A. Leiser AG, Maschinen und Fahrzeuge, 6260 Reiden LU (CH)
(72) Erfinder: Burri, Robert, CH-6260 Reiden (CH)
(74) Vertreter: Rutz & Partner

(57) **Zusammenfassung**

Konstantdruckdüse (10), insbesondere zur Abgabe einer Sole (12) von einem Fahrzeug auf einen Verkehrsweg, umfassend ein Gehäuse (14), das eine der Zufuhr der Sole (12) dienende Eintrittsöffnung (26) und eine der Abgabe der Sole (12) dienende Austrittsöffnung (20) aufweist. Die Austrittsöffnung (20) der Konstantdruckdüse (10) kann durch axiale Verschiebung eines im Gehäuse (14) gelagerten Kolbens (18) freigelegt und verschlossen werden. Erfindungsgemäss mündet die Eintrittsöffnung (26) im röhrenförmigen Gehäuse (14) in eine Düsenkammer (22) ein, die durch die Frontseite des Kolbens (18) begrenzt ist. Die Rückseite des Kolbens (18) liegt an einem Medium (42) an, welches eine vorzugsweise einstellbare Kraft auf den Kolben (18) ausübt. Der Kolben (18) ist unter entsprechendem Druck der einfliessenden Sole (12) gegen das Medium (42) so weit verschiebbar, bis die Austrittsöffnung (20), die in dem parallel zum Kolben (18) verlaufenden Gehäuse (14) vorgesehen ist, freigelegt wird und die Sole (12) daraus austreten kann.

## Beschreibung

Die vorliegende Erfindung betrifft eine Düse zur Abgabe einer Sole nach dem Oberbegriff des Anspruchs 1.

Zum Verhindern von Unfällen durch Eis- oder Schneeglätte auf Fahrbahnen und Fusswegen wird im Winterdienst häufig Salz in kristalliner Form auf Verkehrswegen ausgetragen. Ein Nachteil beim Ausstreuen von Salzkörnern ist jedoch, dass die Salzkörner nicht gleichmässig über die Verkehrswege verteilt werden. Es zeigen sich beim Streuen der Salzkörner in regelmässigen Abständen Flächen mit höherer und geringerer Salzdichte. Ausserdem wird eine beträchtliche Menge an Salz durch die Ausstreueinheit zu weit geschleudert und kommt neben den Verkehrswegen zu liegen. Durch das unpräzise Austragen werden zum einen beträchtliche Kosten verursacht, da eine grössere Menge an Salz beschafft und Ausgetragen werden muss. Andererseits belastet eine überhöhte bzw. unpräzis ausgetragene Salzmenge technische Bauten durch Korrosion, was wiederum entsprechende Unterhaltskosten verursacht. Zusätzlich sollte aus Gründen des Umweltschutzes darauf geachtet werden, dass die abgegebene Salzmenge möglichst gering gehalten und präzis eingesetzt wird.

In den letzten Jahren wurde im Winterdienst deshalb verstärkt dazu übergegangen, das Salz nicht mehr in kristalliner Form auszustreuen. Als Alternative wird das Salz vorgängig im Wasser gelöst und als Salzwasser, sogenannte Sole, auf Fahrbahnen und Wegen aufgebracht. Ein Vorteil des Ausbringens von Sole gegenüber Salz in kristalliner Form besteht darin, dass nach dem Austragen von Sole nicht zuerst die Kristallstruktur des Salzes aufgebrochen werden muss. Dieser Prozess, der bei der Abgabe von Salz in kristalliner Form auftritt, entzieht der Umgebung Wärme, wodurch in einer ersten Phase bzw. bei ungünstiger Dosierung oder Wetterlage die Gefahr von Glatteis auf den Verkehrswegen sogar ansteigt. Beim Einsatz der Sole setzt der Tauprozess unmittelbar nach dem ersten Kontakt mit Eis oder Schnee ein, da auch die Wärme der Flüssigkeit zusätzlich zum Auftauen des Schnees oder Eises beiträgt.

Bei heutigen Systemen zur Abgabe der Sole werden sogenannte Flachstrahldüsen verwendet, welche auch bei Hochdruckreinigern oder Feldspritzen eingesetzt werden. Beim Ausbringen der Sole auf Verkehrswegen ist darauf zu achten, dass unabhängig von der Geschwindigkeit des austragenden Fahrzeuges eine konstante Menge Sole auf die Oberfläche der Verkehrswege ausgebracht wird. Die Flachstrahldüsen werden an einem Fahrzeug typischerweise an einem quer zur Fahrtrichtung angeordneten Balken in einer Reihe montiert. Um auch bei höherer Geschwindigkeit genügend Sole pro Wegstrecke ausbringen zu können, sind in Fahrtrichtung z.B. hintereinander mehrere Balken im Abstand von 30cm - 50cm, angebracht.

Die Flachstrahldüsen werden mit einer Bohrung kalibriert. Durch Erhöhen bzw. Absenken der Durchflussmenge in der Zuleitung steigt oder sinkt der Druck in der Düse, wodurch mehr oder weniger Sole aus der Düse austritt. Dabei muss der Druck an einer Düse vervierfacht werden, um die Menge der austretenden Flüssigkeit zu verdoppeln. Ein Nachteil von Flachstrahldüsen ist dabei, dass diese bei niedrigem Druck tropfen und bei hohem Druck stäuben. Durch die auftretende Vernebelung der Flüssigkeit wird ein leichtes Luft-/WasserGemisch gebildet, das nach der Abgabe durch Windböen oder Fahrtwind weggetragen werden kann und damit nicht oder nur ungleichmässig verteilt auf die bearbeiteten Verkehrswege gelangt.

Weiter bekannt sind sogenannte Konstantdruckdüsen, die ein Gehäuse aufweisen, das eine der Zufuhr eines Mediums dienende Eintrittsöffnung und eine der Abgabe des Mediums dienende Austrittsöffnung aufweist, die durch axiale Verschiebung eines im Gehäuse gelagerten Kolbens geöffnet und verschlossen werden kann.

Nachteilig an derartigen Düsen ist, dass sich nach intensivem Gebrauch Solerückstände sowie Korrosion an den Vorrichtungsteilen bilden. Die Solerückstände beeinträchtigen das einwandfreie Funktionieren der Vorrichtung. Insbesondere kann das einwandfreie Funktionieren von Verschlusselementen beeinträchtigt werden. Dabei ist zu beachten, dass Sole mit hohem Druck in das Ventil eingeführt wird, weshalb fehlerhafte Verschlüsse, beispielsweise das unvollständige Eintreten eines Verschlusszapfens in eine Austrittsöffnung, zu einem vollständigen Ausfall der gesamten Anlage führt. Derartige Vorrichtungen erfordern daher typischerweise einen hohen Wartungsaufwand und verursachen entsprechende Kosten. Gegebenenfalls müssen die Ventile ersetzt und in einer Werkstatt repariert werden.

Der vorliegenden Erfindung liegt daher die Aufgabe zu Grunde, eine Düse zu schaffen, die nicht mit den beschriebenen Mängeln behaftet ist. Ferner ist ein Verfahren zu deren Betrieb anzugeben.

Die Düse soll korrosionsbeständig ausgestaltet und einfach aufgebaut sein, so dass die Düse kostengünstig hergestellt und mit geringem Wartungsaufwand funktionsfähig gehalten werden kann.

Die erfindungsgemässe Düse soll es erlauben, einen konstanten vorzugsweise wählbaren Druck der Sole an der Austrittsöffnung zu erzielen, so dass die Sole in kontrollierter Weise abgegeben werden kann.

Ausserdem soll die Düse ein optimiertes Sprühbild aufweisen, um eine gleichmässige Verteilung der Sole auf der zu benetzenden Oberfläche zu erreichen. Dabei soll an der Düse ein gleichmässiger Flüssigkeitsstrahl erzeugt werden, welcher aus Tropfen besteht und nicht vernebelt.

Durch das optimierte Sprühbild soll eine geringere Anzahl von Düsen am Fahrzeug benötigt werden, wodurch Kosten in Beschaffung und Unterhalt eingespart werden können.

Weiter soll mittels der erfindungsgemässen Konstantdruckdüse eine Sole zum Enteisen von Verkehrswegen effizient ausgebracht werden, wobei die Umwelt und technische Einrichtungen entlang der Verkehrswege möglichst gering belastet werden.

Diese Aufgabe wird mit einer Konstantdruckdüse gelöst, welche die in Anspruch 1 angegebenen Merkmale aufweist. Vorteilhafte Ausgestaltungen der Erfindung sind in weiteren Ansprüchen angegeben.

Die erfindungsgemässe Konstantdruckdüse, die vorteilhaft zur Abgabe einer Sole von einem Fahrzeug auf einen Verkehrsweg einsetzbar ist, umfasst ein Gehäuse, das eine der Zufuhr der Sole dienende Eintrittsöffnung und eine der Abgabe der Sole dienende Austrittsöffnung aufweist, die durch axiale Verschiebung eines im Gehäuse gelagerten Kolbens freigelegt und verschlossen werden kann.

Erfindungsgemäss mündet die Eintrittsöffnung im röhrenförmigen Gehäuse in eine Düsenkammer ein, die durch die Frontseite des Kolbens begrenzt ist. Die Rückseite des Kolbens liegt an einem Medium an, welches eine vorzugsweise einstellbare Kraft auf den Kolben ausübt. Der Kolben ist unter entsprechendem Druck der einfliessenden Sole gegen das Medium so weit verschiebbar, bis die Austrittsöffnung, die in dem parallel zum Kolben verlaufenden Gehäuse vorgesehen ist, freigelegt wird und die Sole daraus austreten kann.

Das Medium an der Rückseite des Kolbens, erzeugt auf den Kolben eine vorzugsweise konstante Kraft. Durch den Druck der in die Düsenkammer der Konstantdruckdüse einfliessenden Sole wird der Kolben gegen das Medium zurückgedrängt und damit die Austrittsöffnung freigelegt. Da die Sole durch die Austrittsöffnung entweichen kann, steigt der Druck in der Düsenkammer nicht weiter an. Es stellt sich unabhängig von der Menge und dem Druck der zugeführten Sole ein annähernd konstanter Druck in der Düsenkammer ein, welcher durch den konstanten Druck des Mediums gegen den Kolben bestimmt wird. Beim Vergrössern der Menge, der durch die Eintrittsöffnung in die Konstantdruckdüse fliesende Sole, erhöht sich der Druck in der Düsenkammer, wodurch der Kolben stärker gegen das Medium an dessen Rückseite gepresst und geringfügig verschoben wird. Dadurch wird ein grösserer Bereich der Austrittsöffnung freigelegt, wodurch ein höherer Durchfluss von Sole durch die Austrittsöffnung resultiert und ein signifikanter Druckanstieg in der Düsenkammer vermieden wird. An der Austrittsöffnung wird ein gleichmässiger Flüssigkeitsstrahl erzeugt, welcher aus Tropfen besteht und nicht vernebelt. Der Volumenstrom wird in Abhängigkeit der Fahrgeschwindigkeit des Fahrzeuges erhöht oder gesenkt. Wie beschrieben passt sich der Querschnitt der Austrittsöffnung durch Verschieben des Kolbens dem Volumenstrom an. Der Druck in der Düsenkammer erhöht sich lediglich im Zusammenhang mit der Druckdynamik des Mediums. Der einfache Aufbau der Düse ermöglicht eine kostengünstige Herstellung und reduziert den Wartungsaufwand, um die Düse funktionsfähig zu halten.

In einer vorzugsweisen Ausgestaltung ist die Düsenkammer auf der dem Kolben gegenüber liegenden Seite durch einen axial in das Gehäuse eingesetzten Zylinder begrenzt. Der Zylinder weist vorzugsweise eine koaxial verlaufende Bohrung auf, welche die Eintrittsöffnung bildet oder daran anschliesst. Durch den in das Gehäuse eingelassenen Zylinder resultiert ein besonders einfacher Aufbau der der erfindungsgemässen Konstantdruckdüse. Durch die koaxial zur Achse des Kolbens verlaufende Bohrung wird die Sole direkt in die Düsenkammer geleitet.

In einer weiteren vorzugsweisen Ausführungsform wird die Austrittsöffnung durch einen senkrecht zur Verschiebungsachse des Kolbens verlaufenden Schlitz im Gehäuse gebildet, welcher eine Höhe im Bereich von 0.5mm bis 20mm und eine Länge von 15 % bis 50 % des Mantelumfangs des Gehäuses aufweist. Durch die schlitzförmige Austrittsöffnung wird ein optimiertes Sprühbild des austretenden Solestrahls erzeugt. Die Länge des Schlitzes bestimmt die Breite des Solestrahls und damit die Linie, welche durch das Auftreffen auf dem Verkehrsweg erzeugt wird. Durch den Schlitz wird über die gesamte Breite des Solestrahls eine zumindest annähernd gleichmässige Menge Sole auf den Verkehrsweg abgegeben. Durch das Bearbeiten der Kanten des Schlitzes kann zusätzlich ein individuell gestaltetes Spritzbild des Solestrahls erreicht werden. Die Schlitzform ermöglicht es zudem, einen relativ grossen Bereich des Verkehrsweges mit einer Düse zu benetzen, wodurch weniger Düsen am Fahrzeug benötigt werden und die Effizienz beim Benetzen der Oberfläche von Verkehrswegen mit Sole gesteigert werden kann. In einer vorzugsweisen Ausgestaltung ist am Fahrzeug eine Konstantdruckdüse angeordnet, welche den gesamten zu benetzenden Bereich des Verkehrswegs abdeckt.

In einer besonders bevorzugten Ausführungsform sind die Abmessungen der Düsenkammer in der Ruhelage des Kolbens durch eine Aussparung im Kolben und/oder durch eine Aussparung im Zylinder und/oder durch ein Distanzelement definiert, das zwischen dem Kolben und dem Zylinder eingefügt ist. Dabei weisen die Aussparungen im Kolben und/oder im Zylinder und/oder das Distanzelement vorzugsweise einen konisch verlaufenden Teil und/oder einen zylindrisch verlaufenden Teil auf. Die Form der Düsenkammer beeinflusst unter anderem den Solestrahl. Durch eine Kombination aus einem konischen und einem zylindrischen Teil wird in der Düsenkammer ein optimiertes Strömungsverhalten der Sole erzeugt. Dies führt dazu, dass an der Austrittsöffnung die Sole gleichmässig abgegeben und ein besonders gleichmässiger Solestrahl erzeugt wird. Druckschwankungen in der Zufuhr der Sole können optimal ausgeglichen werden. Abhängig davon, ob die Düsenkammer durch eine Aussparung am Kolben, am Zylinder oder durch das zusätzliche Distanzelement erzeugt wird, können insbesondere Produktionsschritte in der Herstellung der Konstantdruckdüse optimiert werden.

In einer bevorzugten Ausführungsform ist der Durchmesser des Kolbens kleiner, vorzugsweise um 0.05mm bis 6mm, als der Innendurchmesser des Gehäuses, so dass ein Teil der Sole den Kolben umspülen und als Restmenge an einem Auslass aus dem Gehäuse austreten kann. Der Durchmesser des Kolbens und der Innendurchmesser des Gehäuses sind derart gewählt, dass ein Anteil von 30 % - 70 %, besonders bevorzugt ein Anteil von 40 % - 60 %, der durch die Eintrittsöffnung fliessenden Sole aus dem Auslass austritt. Durch das Umspülen des Kolbens mit Sole wird das Sprühbild an der Austrittsöffnung der Konstantdruckdüse weiter verbessert. Da nicht die gesamte Sole durch die Austrittsöffnung fliesst, wird Druck an der Austrittsöffnung reduziert, wodurch die Austrittsgeschwindigkeit des Solestrahls reduziert und das Sprühbild verbessert wird. Durch das stetige Umspülen des Kolbens wird dieser nicht nur optimal gelagert, sondern auch von Ablagerungen frei gehalten. Da nicht die gesamte Sole durch die Austrittsöffnung abgegeben wird, muss der Solezufluss zudem erhöht werden, damit die gewünschte Menge Sole auf den Verkehrsweg abgegeben wird. Durch die verstärkte Strömung des Soleflusses werden wiederum Ablagerungen verhindert bzw. sofort abgetragen, dies insbesondere am Kolben. Eine Wartung der Vorrichtung kann dadurch weitgehend vermieden werden, weshalb diese stets einsatzbereit ist und Unterhaltskosten vermieden werden können.

Das eine Kraft auf den Kolben ausübende Medium kann eine mechanische, hydraulische, pneumatische oder elektromechanische Vorrichtung sein. Besonders vorteilhaft kann ein Federelement, z.B. eine Spiralfeder oder eine Plattfeder eingesetzt werden. Dabei wird vorzugsweise ein Einstellelement vorgesehen, mittels dessen der auf den Kolben ausgeübte Druck einstellbar ist. Z.B. Wird ein Einstellelement vorgesehen, das der Aufnahme eines Endstücks eines Federelements dient und das mit einem Gewinde versehen ist, welches mit einem Gegengewinde am Gehäuse eine Schraubverbindung bildet, so dass das Einstellelement gegen das Gehäuse drehbar ist, um eine gewünschte Vorspannung des Federelements einzustellen.

Die Kraft, mit welcher der Kolben gegen den Zylinder gepresst wird, sollte möglichst konstant sein, um einen konstanten Druck in der Düsenkammer und damit ein optimiertes Sprühbild an der Austrittsöffnung zu erzielen. Um das Sprühbild verändern zu können, wird vorzugsweise das genannte Einstellelement vorgesehen, mittels dessen der Druck in der Düsenkammer und damit die Austrittsgeschwindigkeit des Solestrahls beeinflusst werden können. Federelemente, wie beispielsweise Spiral- oder Plattfedern, sind dabei kostengünstig in der Fertigung, wenig störungsanfällig und benötigen daher folglich auch kaum Unterhalt. Bei einem hydraulischen, pneumatischen oder elektrischen Medium kann auf einfache Weise während des Betriebs der Konstantdruckdüse, die Kraft des Mediums, verändert werden. Folglich können durch eine präzise Dosierung des Solestrahls die Umwelt oder technische Einrichtungen entlang der Verkehrswege, durch minimale Abgabe von Sole, geschont werden. Gleichzeitig kann die Solemenge an exponierten Stellen bedarfsweise erhöht werden, um eine erhöhte Wirkung zu erzielen. Durch die steuerbare Abgabe der Sole kann der Solestrahl auch den Witterungsverhältnissen, dem Verkehrsweg oder der Geschwindigkeit des Fahrzeuges angepasst werden. Der Winterdienst kann daher programmgesteuert und somit optimal erfolgen. Vorzugsweise erfolgt die Steuerung der Abgabe von Sole in Abhängigkeit von Positionsdaten, die z.B. von einem GPS-Gerät zur Verfügung gestellt werden.

Insbesondere bei einem hydraulischen, pneumatischen oder elektromechanischen Medium kann die Kraft, mit welcher das Medium gegen den Kolben drückt, besonders einfach auch in Abhängigkeit der Position des Kolbens auf der Bewegungsachse verändert werden. Somit kann eine Unlinearität des Mediums kompensiert oder auch erzeugt werden. Die Kraft des auf den Kolben einwirkenden Mediums wird in vorzugsweisen Ausgestaltungen daher in Abhängigkeit der Position des Kolbens gesteuert, wodurch eine von der Geschwindigkeit des Fahrzeugs oder dem Solefluss abhängige Steuerung mit einer gewünschten Steuerkurve erfolgen kann. Die Steuerkurve für das Medium kann auch weitere Parameter, wie beispielsweise die Temperatur, Windgeschwindigkeit oder Wartungszyklen der Konstantdruckdüse, berücksichtigen.

In einer weiteren vorzugsweisen Ausgestaltung ist das Gehäuse und/oder der Kolben und/oder der Zylinder und/oder das Medium und/oder das Einstellelement aus einem korrosionsbeständigen Material, vorzugsweise aus rostfreiem Stahl, Leichtmetall, wie Aluminium, oder aus Kunststoff gefertigt. Durch die Fertigung der einzelnen Teile der Konstantdruckdüse aus nicht-rostenden und korrosionsbeständigen Materialien wird der Wartungsaufwand, beispielsweise für die Reinigung und den Austausch der Düsen oder Teile davon, weiter reduziert.

In einem vorzugsweisen Verfahren wird die Sole aus einem Solebehälter wenigstens einer Konstantdruckdüse zugeführt und mindestens teilweise auf den Verkehrsweg abgegeben. Eine allfällige Restmenge wird in den Solebehälter zurückgeführt. Die Sole wird als Solestrahl auf den Verkehrsweg abgegeben. Die nicht an der Austrittsöffnung der Konstantdruckdüse als Solestrahl austretenden Sole fliesst als Restmenge in den Solebehälter zurück und bleibt dem Kreislauf erhalten, wodurch Kosten gesenkt werden können. Durch das Umspülen des Kolbens mit Sole werden der Solestrahl optimiert und Ablagerungen vermieden.

Nachfolgend wird die Erfindung anhand von Zeichnungen näher erläutert. Dabei zeigt:
- Fig. 1: eine erfindungsgemässe Konstantdruckdüse 10 mit einem Gehäuse 14, welches eine der Zufuhr von Sole 12 dienende Eintrittsöffnung 26, eine Austrittsöffnung 20, einen Auslass 50 und ein Einstellelement 44 aufweist;
- Fig. 2: die Konstantdruckdüse 10 von Figur 1 in einem Längsschnitt mit einem Zylinder 24, einem Kolben 18 und einem Federelement 46 als Medium 42;
- Fig. 3a: eine Detailansicht einer Düsenkammer 22 der erfindungsgemässe Konstantdruckdüse 10 mit einem Distanzelement 32;
- Fig. 3b: eine weitere Ausführungsform einer Düsenkammer 22 der erfindungemässen Konstantdruckdüse 10, bei der die Düsenkammer 22 in den Zylinder 24 eingearbeitet ist;
- Fig. 4a: eine Detailansicht eines weiteren Federelements 46, in der erfindungsgemässen Konstantdruckdüse 10, zur Erzeugung einer Kraft auf den Kolben 18;
- Fig. 4b: eine Detailansicht eines weiteren Mediums 42, in der erfindungsgemässen Konstantdruckdüse 10;
- Fig. 5: den Flussweg von Sole 12 einer erfindungsgemässen Vorrichtung, bei der ein Rücklauf eines Teils der Sole 12 vorgesehen ist.

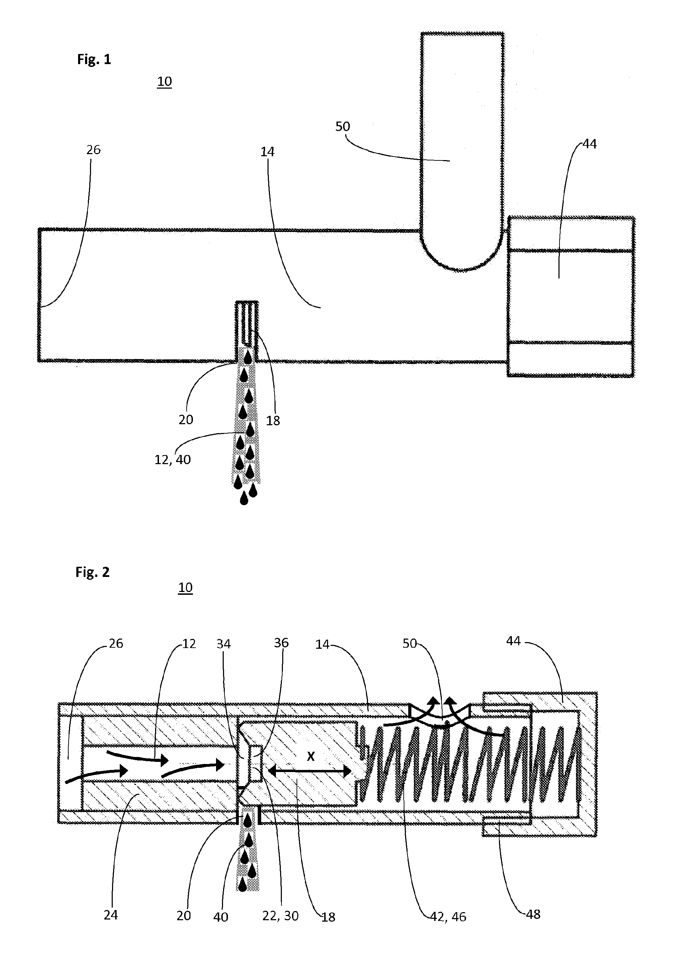

Figur 1 zeigt eine auf einem Fahrzeug installierbare erfindungsgemässe Konstantdruckdüse 10, welche vorteilhaft zur Abgabe von Sole 12 auf Verkehrswege verwendet werden kann.

Mit Sole 12 wird ein Gemisch bezeichnet, welches hauptsächlich aus Salz (Natriumchlorid) und Wasser besteht. Das Salz wird z.B. in einer Konzentration von bis zu 24 %, vorzugsweise im Bereich zwischen 15 % und 20 %, im Wasser gelöst.

Als Verkehrswege werden beispielsweise Strassen, Fuss- und Radwege, Treppen oder Plätze, aber auch Autobahnen oder Flugpisten bezeichnet, auf welchen Eis- und Schneeglätte entstehen kann.

Das mit den erfindungsgemässen Düsen bestückte Fahrzeug, zum Ausbringen der Sole, kann mit einem beliebigen Antrieb, wie einem Elektro- oder Verbrennungsmotor, ausgestattet sein. Es kann jedoch auch durch menschliche oder tierische Muskelkraft angetrieben sein. Die Grösse des Fahrzeugs ist abhängig vom Einsatzgebiet, auf welchem die Sole ausgetragen werden soll. So werden auf Fusswegen typischerweise Schubkarren oder kleine Fahrzeuge eingesetzt. Auf Strassen, Autobahnen oder Flugzeugpisten sind es meist Lastkraftwagen mit entsprechender Kapazität.

Die Konstantdruckdüse 10 umfasst ein Gehäuse 14, welches vorzugsweise röhrenförmig ausgestaltet ist. Neben einer bevorzugten zylindrischen Grundform des Gehäuses 14 sind auch mehrkantige, z.B. beispielsweise vier- oder sechskantige röhrenförmige Gehäuseformen realisierbar. Auch kann der Aussendurchmesser der Konstantdruckdüse 10 in axialer Richtung an verschiedenen Stellen variieren und z.B. an Montagevorrichtungen angepasst sein.

Durch eine Eintrittsöffnung 26 fliesst Sole 12 in eine Düsenkammer 22 der Konstantdruckdüse 10 ein. Die Eintrittsöffnung 26 stellt eine Verbindung zwischen der Düsenkammer 22 und einem Leitungssystem 60 her, über welches die Sole 12 zur Konstantdruckdüse 10 geführt wird. Zur mechanischen Verbindung der Eintrittsöffnung 26 mit dem Leitungssystem kann die Eintrittsöffnung 26 beispielsweise mit einem Gewinde, einer Muffe, einem Nippel oder mit anderen Kopplungsmechanismen versehen werden.

Durch die Austrittsöffnung 20 wird die Sole 12 abgegeben. Die Austrittsöffnung 20 besteht in der gezeigten Ausgestaltung im Wesentlichen aus einem parallel zur Oberkante des Kolbens verlaufenden Schlitz im Gehäuse 14 der Konstantdruckdüse 10. Der Schlitz weist vorzugsweise eine Höhe von 0.5mm bis 20mm auf. Die Länge des Schlitzes erstreckt sich dabei um 15 %-50 % des Mantelumfangs des Gehäuses. Die Form sowie die Länge und Breite des Schlitzes kann den Anforderungen an das Sprühbild entsprechen angepasst werden. Dabei kann beispielsweise der Schlitz an einzelnen Stellen verbreitert oder abgerundet werden. Dadurch kann beispielsweise an den Enden der Austrittsöffnung der Austritt an Sole 12 erhöht werden. Die Bearbeitung des Schlitzes erfolgt beispielsweise durch Sägen, Fräsen oder Schleifen. Zusätzlich könne insbesondere die Innen- und Aussenkanten des Schlitzes derart bearbeitet werden, dass durch Erreichen einer laminaren Strömung oder durch Turbulenzen das Sprühbild weiter optimiert wird. Durch die Länge des Schlitzes wird die Breite des Solestrahls bestimmt und damit die Breite der Spur, welche durch den Solestrahl auf dem Verkehrsweg abgedeckt wird. Die Breite des Schlitzes bestimmt somit, wie nahe nebeneinander und in welchem Abstand zum Verkehrsweg die Konstantdruckdüsen 10 am Fahrzeug anzuordnen sind, damit eine ausreichende und konstante Benetzung des Verkehrsweges mit Sole 13 erreicht wird. Je breiter der Schlitz ist, desto weiter auseinander können die Konstantdruckdüsen 10 angeordnet werden.

In der gezeigten Ausgestaltung tritt ein Teil der durch die Eintrittsöffnung 26 eintretenden Sole 12 nicht an der Austrittsöffnung 20, sondern an einem Auslass 50 als Restmenge aus der Konstantdruckdüse 10 aus. Die Austrittsöffnung 20 und der Auslass 50 sollte mindestens die Menge an Sole 12 abgeben können, die über die Eintrittsöffnung 26 in die Konstantdruckdüse 10 gelangt. Das heisst, dass die geometrische Fläche der Austrittsöffnung 20 und des Auslasses 50 zusammen, grösser sein sollten, als diejenige der Eintrittsöffnung 26.

An der der Eintrittsöffnung 26 gegenüberliegenden Seite der Konstantdruckdüse 10 ist ein Einstellelement 44 vorgesehen, durch das eine Vorspannung erzeugt wird. Die eingestellte Vorspannung bestimmt den Druck, den die Sole 40 in der Düsenkammer 22 erzeugen muss, um den Kolben zu verschieben und die Austrittsöffnung zu öffnen. Damit werden auch die Durchflussmenge und die Geschwindigkeit des an der Austrittöffnung 20 abgegebenen Solestrahls 40 festgelegt.

Figur 2 zeigt einen Längsschnitt durch die Konstantdruckdüse 10 von Figur 1. Dabei ist gezeigt, dass im Bereich der Eintrittsöffnung 26 ein Zylinder 24 in das Gehäuse 14 eingelassen ist. Der Zylinder 24 wird beispielsweise durch Kleben, Pressen, Löten oder Schweissen fest mit dem Gehäuse 14 verbunden, so dass dieser dem Druck der einströmenden Sole 12 standhält. Es ist aber auch möglich den Zylinder 14 einstückig aus dem Gehäuse 14 auszuarbeiten oder eine Platte in diesen einzusetzen. Im Zentrum des Zylinders 24 befindet sich eine Aussparung, durch welche die Sole 12 in die Düsenkammer 22 fliesst.

Im Gehäuse 14 der Konstantdruckdüse 10 befindet sich in einer axialen Richtung zum Zylinder 24 ein Kolben 18, der entlang der Verschiebungsachse x koaxial zur Achse des Zylinders 24 verschiebbar ist. Der Kolben 18 ist in seiner Form und Grösse an den Innendurchmesser des Gehäuses 14 angepasst. Der Kolben 18 ist geringfügig kleiner als der Innendurchmesser des Gehäuses 14, so dass sich dieser ungehindert auf der Verschiebungsachse x bewegen und von einem Teil der Sole umspült werden kann. Die oberen und unteren Flächen sowie die Kanten des Kolbens 18 können zusätzlich bearbeitet, vorzugsweise abgerundet sein, um das Strömungsverhalten der Sole zu optimieren.

Zwischen dem Kolben 18 und dem Zylinder 24 ist eine Düsenkammer 22 eingeschlossen, die vorzugsweise aus einem im Kolben 18 eingelassenen konisch verlaufenden Teil 34 und einem zylindrisch verlaufenden Teil 36 besteht. Die Form der Düsenkammer 22 beeinflusst das Strömungsverhalten der einfliessenden Sole 12 und damit den Solestrahl 40 an der Austrittsöffnung 20. Die in die Düsenkammer 22 einfliessende Sole 12 bewirkt einen Druck, welcher den Kolben 18 vom Zylinder 24 wegdrängt.

Das auf der Rückseite des Kolbens 18 angeordnete Medium 42 presst den Kolben 18 gegen den Zylinder 24 zurück. Das Medium 42 liegt in der Verlängerung der Verschiebungsachse x und verschiebt den Kolben 18. Durch die Kraft des Mediums 42 wird die Eintrittsöffnung 26 beziehungsweise die Düsenkammer 22 verschlossen. Das Medium 42 kann beispielsweise ein Federelement 44 sein, welches als Spiralfeder ausgebildet ist.

Je stärker der Druck der einfliessenden Sole 12 ist, desto grösser ist die Kraft, welche auf den Kolben 18 wirkt und ihn gegen das Medium 42 drückt. Bei ausreichend hohem Druck der einfliessenden Sole 12 übersteigt die von der Sole 12 auf den Kolben 18 ausgeübte Kraft die Kraft des Mediums 42, weshalb der Kolben 18 gegen das Medium 42 verschoben wird und die Düsenkammer Austrittsöffnung 20 geöffnet wird und die Sole 12 aus der Düsenkammer 22 ausfliessen kann. Die Austrittsöffnung 20 ist dabei vorzugsweise ein Schlitz, welcher parallel zur Oberkante des Kolbens 18 am Gehäuse 14 verläuft. Durch die Abgabe der Sole 12 aus der Düsenkammer 22 kann sich der Druck in der Düsenkammer 22 nicht weiter erhöhen, weshalb der Kolben 18 das Medium 42 nicht weiter zurückdrängen kann. Es resultiert somit ein konstanter Druck an der Austrittsöffnung 20.

Bei Versuchen in der Praxis hat sich gezeigt, dass bei der Wahl eines Kolbens 18, dessen Durchmesser kleiner, vorzugsweise 0,05mm bis 6mm oder 1% bis 12% kleiner als der Innendurchmesser des Gehäuses 14 ist, unter anderem der Solestrahl 40 vorteilhaft beeinflusst wird. Der Kolben 18 schliesst dabei nicht dicht an die Innenwand des Gehäuses 14 an und wird von einem Teil der Sole 12 umspült. Durch die resultierende Flüssigkeitslagerung des Kolbens, kann dieser 18 reibungsfrei im Gehäuse 14 bewegt werden. Dies bewirkt, dass auch feinste Druckunterschiede im Leitungssystem beziehungsweise Änderungen in der Menge der zugeführten Sole 12 gegenüber der Austrittsöffnung 20 ausgeglichen werden können.

Beim Betrieb bekannter Düsen mit Sole hat sich gezeigt, dass sich nach kurzer Zeit Ablagerungen bilden, welche den Betrieb der Düse beeinträchtigen. Durch das Umspülen des Kolbens 18 bei der erfindungsgemässen Konstantdruckdüse 10 mit Sole 12 werden diese Ablagerungen reduziert oder gänzlich vermieden, wenn die Sole 12 durch einen Auslass, welcher in Flussrichtung hinter dem Kolben 18 liegt als Restmenge aus der Konstantdruckdüse 10 ausfliessen kann. Durch die Strömung der Sole 12 um den Kolben 18 wird dieser ausserdem in einer Mittelposition innerhalb des Gehäuses 14 gehalten, wodurch das Sprühbild zusätzlich optimiert wird.

Auf der gegenüberliegenden Seite des Kolbens 18 wird das Medium 42 durch ein Einstellelement 44 gehalten. Durch das Einstellelement 44 kann die Distanz zwischen Kolben 18 und Einstellelement 44 verändert und die als Medium 42 dienende Feder derart komprimiert werden, dass eine gewünschte Vorspannung resultiert. Dadurch können der Druck in der Düsenkammer 22 und damit der Solestrahl 40 wahlweise verändert werden. Das Einstellelement 44 weist vorzugsweise ein Gewinde 48 auf, das in ein Gegengewinde 48 am Gehäuse 14 eingreift, so dass das Einstellelement 44, an welcher das Medium 42 anliegt, auf der Verschiebungsachse x verschoben werden kann.

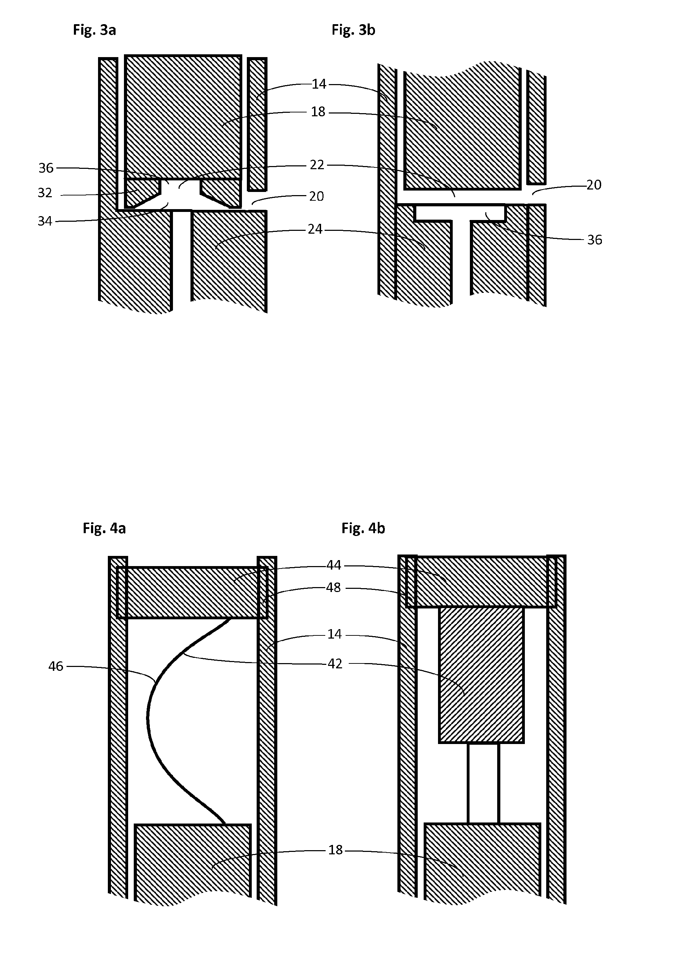

Figur 3a zeigt eine zweite Ausführungsform einer Düsenkammer 22 der erfindungsgemässen Konstantdruckdüse 10. Die Düsenkammer 22 ist dabei nicht in den Kolben 18 eingearbeitet, sondern wird durch ein zusätzliches Distanzelement 32 bestimmt. Das Distanzelement 32 ist zwischen dem Kolben 18 und dem Zylinder 24 angeordnet und mit dem Zylinder 24 oder vorzugsweise mit dem Kolben 18 fest verbunden. Das Distanzelement 32 kann ebenfalls einen konischen und einen zylindrischen Teil 34, 36 der Düsenkammer bilden. Das Distanzelement 32 ist vorzugsweise an den Kanten bearbeitet, z.B. abgerundet. Der Zylinder 24 ist z.B. einstückig am Gehäuse 14 angeformt.

Figur 3b zeigt eine weitere Ausführungsform einer Düsenkammer 34 der erfindungsgemässen Konstantdruckdüse 10. Die Düsenkammer 34 ist dabei teilweise in den Zylinder 24 der Konstantdruckdüse 10 eingearbeitet. Die in Figur 3b gezeigte Düsenkammer 34 weist nur einen zylindrischen Teil 36 auf. Es ist jedoch auch möglich zusätzlich einen konischen Teil 34 in den Zylinder 24 einzuarbeiten.

Figur 4a zeigt eine zweite Ausführungsform des Mediums 42, welches den Kolben 18 gegen die Eintrittsöffnung 26 bzw. Gegen die Sole presst. Das Medium 42 besteht aus einem Federelement 46, welches als Plattfeder ausgebildet ist. Das Federelement 46 kann dabei mit einer Windung (C-förmig), mit zwei Windungen (S-förmig), mit drei Windungen (doppel-S-förmig) oder mit n Windungen in der Konstantdruckdüse 10 enthalten sein. Die in der Figur 4 gezeigte C-förmige Plattfeder weist eine Windung auf.

Das Einstellelement 44 ist in Figur 4a an der Innenseite des Gehäuses 14 der Konstantdruckdüse 10 befestigt. Dadurch kann erreicht werden, dass die Aussenabmessungen der Konstantdruckdüse 10 nicht verändert werden, wenn die Vorspannung des Mediums 42 verstellt und damit das Einstellelement 44 bewegt wird.

Figur 4b zeigt ein weiteres Beispiel, eines in der erfindungsgemässen Konstantdruckdüse 10 verwendeten Mediums 42. Die Kraft, welche das Medium 42 auf den Kolben 18 ausübt, wird dabei hydraulisch, pneumatisch oder elektromechanisch erzeugt. Durch derartige Medien 42 kann während des Betriebs durch variieren der Vorspannung der Solestrahl 40 verändert werden. Dadurch kann die Abgabe der Sole 12 präzise gesteuert werden, indem an bestimmten Stellen des Verkehrswegs die Soleabgabe temporär, mindestens an einzelnen Konstantdruckdüsen 10, erhöht oder reduziert oder gar eingestellt wird.

Das Medium 42 kann insbesondere bei hydraulischen, pneumatischen oder elektrischen Medien 42 auch ausserhalb der Konstantdruckdüse 10 angeordnet sein. Dabei wird die Kraft vorzugsweise über eine Welle, welche Flüssigkeitsdicht an das Einstellelement 44 anschliesst, auf den Kolben 18 übertragen. Dadurch gerät das Medium 42 nicht direkt mit der Sole 12 in Berührung, wodurch die Gefahr von Korrosion am Medium 42 reduziert wird.

Es ist auch möglich, beliebige Medien 42, zum Erzeugen einer Kraft auf den Kolben 18, miteinander zu kombinieren. So kann beispielsweise ein hydraulisches Medium 42 mit einer Plattfeder kombiniert werden.

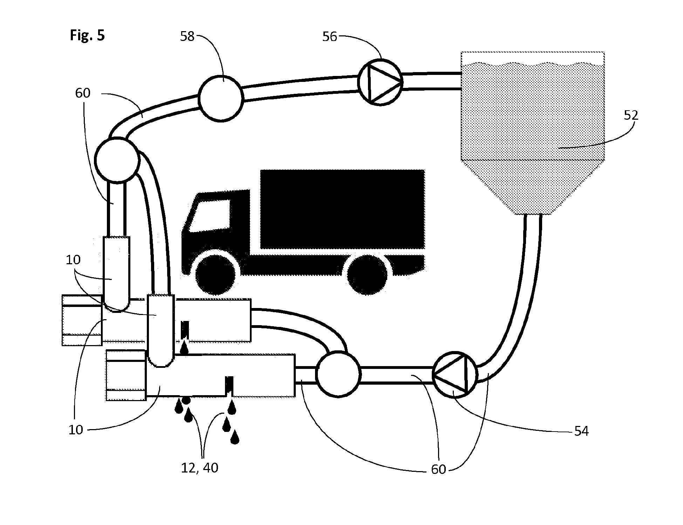

Figur 5 zeigt den Flussweg von Sole 12 einer erfindungsgemässen Vorrichtung, bei der ein Rücklauf eines Teils der Sole 12 vorgesehen ist. Die Sole 12 wird in einem Solebehälter 52 gelagert, beziehungsweise aus einem solchen entnommen und über ein Leitungssystem 60, welches vorzugsweise aus Rohren und Schläuchen besteht, der Konstantdruckdüse 10 zugeführt. Zur Erhöhung des Druckes beziehungsweise zur Steuerung des Solezuflusses kann in der Zuleitung zur Konstantdruckdüse 10 eine Pumpe 54 enthalten sein. An der Konstantdruckdüse 10 wird die Sole 12 über die Austrittsöffnung 20 auf den Verkehrsweg abgegeben. Bei einer Konstantdruckdüse 10, bei welcher der Kolben 18 zusätzlich von einer Restmenge der Sole 12 umspült wird, wird diese Restmenge über einen Auslass 50 und ein Leitungssystem 60 in den Solebehälter 52 zurückgeführt. Bei Bedarf kann zusätzlich eine Restmengenpumpe 56 in das Leitungssystem 60 eingefügt werden, welche die Restmenge in den Solebehälter 52 zurückführt. Um störende Partikel aus der Solerestmenge zu entfernen, kann zusätzlich ein Filter 58 in den Rücklauf eingebaut werden.

Durch die Konstantdruckdüse 10 können bis zu 300 1/min Sole 12 auf Verkehrswege abgeben werden. Pro Konstantdruckdüse 10 wird vorzugsweise zwischen 10 1/min - 50 1/min Sole 12 abgegeben. Zusätzlich kann im vorgängig beschriebenen Verhältnis Sole 12 als Restmenge durch den Auslass 50 an den Solebehälter 52 zurückgeführt werden. Der Druck in der Düsenkammer 22 der Konstantdruckdüse 10 beträgt dabei zwischen 0,5 bar - 10 bar, vorzugsweise zwischen 2 bar - 3 bar.

Um Ablagerungen und insbesondere Korrosion vorzubeugen, sollten die Teile der Konstantdruckdüse 10, welche mit Sole 12 in Berührung gelangen, aus rostfreien-, korrosionsbeständigen Materialien gefertigt sein. Es ist auch möglich, zumindest die Oberfläche der Teile entsprechend zu behandeln. Vorzugsweise wird deshalb mindestens das Gehäuse 14 oder der Kolben 18 oder der Zylinder 24 oder das Medium 42 oder das Einstellelement 44 aus rostfreiem Stahl, aus einem Leichtmetall wie beispielsweise Aluminium oder aus einem Kunststoff gefertigt.

## Patentansprüche

1. Konstantdruckdüse (10), insbesondere zur Abgabe einer Sole (12) von einem Fahrzeug auf einen Verkehrsweg, umfassend ein Gehäuse (14), das eine der Zufuhr der Sole (12) dienende Eintrittsöffnung (26) und eine der Abgabe der Sole (12) dienende Austrittsöffnung (20) aufweist, die durch axiale Verschiebung eines im Gehäuse (14) gelagerten Kolbens (18) freigelegt und verschlossen werden kann,
**dadurch gekennzeichnet, dass** die Eintrittsöffnung (26) im röhrenförmigen Gehäuse (14) in eine Düsenkammer (22) einmündet, die durch die Frontseite des Kolbens (18) begrenzt ist, dessen Rückseite an einem Medium (42) anliegt, welches eine vorzugsweise einstellbare Kraft auf den Kolben (18) ausübt, dass der Kolben (18) unter entsprechendem Druck der einfliessenden Sole (12) gegen das Medium (42) so weit verschiebbar ist, bis die Austrittsöffnung (20), die in dem parallel zum Kolben (18) verlaufenden Gehäuse (14) vorgesehen ist, freigelegt wird und die Sole (12) daraus austreten kann.

2. Konstantdruckdüse (10) nach Anspruch 1, **dadurch gekennzeichnet, dass** die Düsenkammer (22) auf der dem Kolben (18) gegenüber liegenden Seite durch einen axial in das Gehäuse (14) eingesetzten Zylinder (24) begrenzt ist, der eine vorzugsweise koaxial verlaufende Bohrung aufweist, welche die Eintrittsöffnung (26) bildet oder daran anschliesst.

3. Konstantdruckdüse (10) nach Anspruch 1 oder 2, **dadurch gekennzeichnet, dass** die Austrittsöffnung (20) ein senkrecht zur Verschiebungsachse (x) des Kolbens (18) verlaufender Schlitz ist, welcher eine Höhe im Bereich von 0.5mm bis 20mm und eine Länge von 15 %-50 % des Mantelumfangs des Gehäuses (14) aufweist.

4. Konstantdruckdüse (10) nach Anspruch 1, 2 oder 3, **dadurch gekennzeichnet, dass** die Düsenkammer (22) in der Ruhelage des Kolbens (18) durch eine Aussparung (30) im Kolben (18) und/oder durch eine Aussparung (30) im Zylinder (24) und/oder durch ein Distanzelement (32) definiert ist, das zwischen dem Kolben (18) und dem Zylinder (24) eingefügt ist.

5. Konstantdruckdüse (10) nach Anspruch 4, **dadurch gekennzeichnet, dass** die Aussparungen (30) im Kolben (18) und/oder im Zylinder (24) und/oder das Distanzelement (32) einen konisch verlaufenden Teil (34) und/oder einen zylindrisch verlaufenden Teil (36) aufweisen.

6. Konstantdruckdüse (10) nach einem der Ansprüche 1 bis 5, **dadurch gekennzeichnet, dass** der Durchmesser des Kolbens (18) um 0.05mm bis 6mm kleiner ist als der Innendurchmesser des Gehäuses (14), so dass ein Teil der Sole (12) den Kolben (18) umspülen und als Restmenge an einem Auslass (50) aus dem Gehäuse (14) austreten kann.

7. Konstantdruckdüse (10) nach Anspruch 6, **dadurch gekennzeichnet, dass** der Durchmesser des Kolbens (18) und der Innendurchmesser des Gehäuses (14) derart gewählt sind, dass ein Anteil von 30 % - 70 %, besonders bevorzugt ein Anteil von 40 % - 60 %, der durch die Eintrittsöffnung (26) fliessenden Sole (12) aus dem Auslass (50) austritt.

8. Konstantdruckdüse (10) nach einem der Ansprüche 1 bis 7, **dadurch gekennzeichnet, dass** das eine Kraft auf den Kolben (18) ausübende Medium (42) eine mechanische, hydraulische, pneumatische oder elektromechanische Vorrichtung, vorzugsweise ein Federelement (46), wie eine Spiralfeder oder eine Plattfeder ist.

9. Konstantdruckdüse (10) nach Anspruch 8, **dadurch gekennzeichnet, dass** ein Einstellelement (44) vorgesehen ist, das der Aufnahme eines Endstücks des Federelements (46) dient und das mit einem Gewinde versehen ist, welches mit einem Gegengewinde am Gehäuse (14) eine Schraubverbindung (48) bildet, so dass das Einstellelement (44) gegen das Gehäuse (14) drehbar ist, um eine gewünschte Vorspannung des Federelements (44) einzustellen.

10. Konstantdruckdüse (10) nach einem der Ansprüche 1 bis 9, **dadurch gekennzeichnet, dass** das Gehäuse (14) und/oder der Kolben (18) und/oder der Zylinder (24) und/oder das Medium (42) und/oder das Einstellelement (44) aus einem korrosionsbeständigen Material, vorzugsweise aus rostfreiem Stahl, Leichtmetall, wie Aluminium, oder aus Kunststoff gefertigt ist.

11. Verfahren, insbesondere zur Abgabe einer Sole (12) von einem Fahrzeug auf einen Verkehrsweg, mit einer Konstantdruckdüse (10) nach einem der Ansprüche 1 - 10, die ein Gehäuse (14) umfasst, das eine der Zufuhr der Sole (12) dienende Eintrittsöffnung (26) und eine der Abgabe der Sole (12) dienende Austrittsöffnung (20) aufweist, die durch axiale Verschiebung eines im Gehäuse (14) gelagerten Kolbens (18) freigelegt und verschlossen werden kann, **dadurch gekennzeichnet, dass** Sole (12) durch eine Eintrittsöffnung (26) in eine im röhrenförmigen Gehäuse (14) vorgesehene Düsenkammer (22) gegen die Frontseite des Kolbens (18) geführt wird, und der Kolben (18) dadurch gegen einen an dessen Rückseite anliegendes Medium (42) gedrückt und so weit verschoben wird, bis die Austrittsöffnung (20), die in dem parallel zum Kolben (18) verlaufenden Gehäuse (14) vorgesehen ist, freigelegt wird und die Sole (12) daraus austreten kann.

12. Verfahren nach Anspruch 11, **dadurch gekennzeichnet, dass** der Kolben (18) von einem Teil der Sole (12) umspült wird, der als Restmenge an einem Auslass (50) aus dem Gehäuse (14) austritt.

13. Verfahren nach Anspruch 11 oder 12, **dadurch gekennzeichnet, dass** vorzugsweise mittels eines Einstellelements (44), die auf die Rückseite des Kolbens (18) einwirkende Kraft des Mediums (42) eingestellt wird, um eine Vorspannung zu erzeugen, die durch den Druck der zugeführten Sole (12) überwunden werden muss.

14. Verfahren nach Anspruch 12 oder 13, **dadurch gekennzeichnet, dass** die Sole (12) aus einem Solebehälter (52) wenigstens einer Konstantdruckdüse (10) zugeführt und mindestens teilweise auf den Verkehrsweg abgegeben wird und eine mögliche Restmenge in den Solebehälter (56) zurück geführt wird.
